# EUROPÄISCHE PATENTANMELDUNG

(11) **EP 0 823 201 A2**
(43) Veröffentlichungstag der Anmeldung: **11.02.1998**
(21) Anmeldenummer: 97112678.4
(22) Anmeldetag: 24.07.1997
(51) Int. Cl.: A01F 12/18

(54) **Drescheinrichtung für Mähdrescher**

(30) Priorität: 07.08.1996 DE 19631866
(71) Anmelder: SAME DEUTZ-FAHR S.P.A., 24047 Treviglio (Bergamo) (IT)
(72) Erfinder: Büermann, Martin, 89362 Offingen (DE)
(74) Vertreter: Dreiss, Fuhlendorf, Steimle & Becker, Patentanwälte

(57) **Zusammenfassung**

Drescheinrichtung für einen Mähdrescher, wobei die Drescheinrichtung als Mehrtrommeldreschwerk ausgebildet ist. Erfindungsgemäß ist ein im Wirkbereich zumindest der Wendetrommel angeordneter Korbbereich aus dem Wirkbereich der Wendetrommel heraus bewegbar.

## Beschreibung

Die Erfindung betrifft eine Drescheinrichtung für einen Mähdrescher mit den Merkmalen des Oberbegriffes des Patentanspruches 1.

Durch die New Holland-Mähdrescher der TX-Baureihe ist eine Drescheinrichtung für Mähdrescher bekannt, die eine Dreschtrommel mit einem Zugeordneten Dreschkorb aufweist. Der Dreschtrommel nachgeordnet ist eine Wendetrommel, in deren Wirkbereich ein Wendekorb angeordnet ist, wobei der Wendetrommel ein Zentrifugalabscheider mit Abscheidekorb Zugeordnet ist.

In der Praxis hat sich herausgestellt, daß insbesondere bei trockenen Ernteverhältnissen das Leistungspotential von einer solchen Drescheinrichtung (Mehrtrommeldreschwerk) nicht voll ausgeschöpft werden kann. Aufgrund der mehrfachen Gutumlenkung (zunächst beim Übergang im Bereich von der Dreschtrommel zu der Wendetrommel, danach im Bereich von der Wendetrommel zur Abscheidetrommel) tritt ein erhöhter Anteil von Kurzstroh auf, der vor allem die Kornabscheidung in der nachgeschalteten Abscheideeinrichtung (Schüttler) negativ beeinflußt.

Der Erfindung liegt daher die Aufgabe Zugrunde, die genannte Drescheinrichtung für Mähdrescher derart zu gestalten, daß eine bessere Anpassung an die jeweiligen Dreschbedingungen möglich ist und insbesondere eine Verringerung der Kurzstrohanteile eintritt.

Diese Aufgabe ist durch die kennzeichnenden Merkmale des Patentanspruchs 1 gelöst.

Durch die Bewegung des im Bereich zumindest der Wendetrommel angeordneten Korbbereiches aus dem Wirkbereich der Wendetrommel heraus wird eine Verringerung des Kurzstrohanteiles erreicht, weil eine Gutumlenkung im Wendetrommelbereich nicht mehr oder nicht mehr so stark stattfindet, da das Erntegut nicht mehr im Bereich der Wendetrommel bearbeitet, sondern von der Dreschtrommel zur Abscheidetrommel geleitet wird. Dadurch kommt es zu einer schonenden Behandlung des Erntegutes (Stroh) und es wird ein verringerter Kurzstrohanteil erreicht. Da der Anteil an Kurzstroh verringert ist, erhöht sich auch die Abscheideleistung der nachgeordneten Einrichtungen, insbesondere die Kornabscheidung eines Schüttlers oder eines oder mehrerer Abscheiderotoren. Für die Bewegung des Korbbereiches in den Wirkbereich zumindest der Wendetrommel oder aus diesem heraus finden insbesondere lineare Bewegungen (Verschiebungen) sowie Drehbewegungen Anwendung, wobei in der Drehbewegung die bevorzugte Bewegung gesehen wird, da sie sich konstruktiv einfacher gestalten läßt.

In Weiterbildung der Erfindung ist es vorgesehen, daß die Körbe oder bewegliche Teile derselben in einer beliebigen Stellung zwischen Wirkbereich und unwirksamen Bereich arretierbar sind. Damit läßt sich ganz gezielt die Verringerung des Kurzstrohanteiles in Abhängigkeit von weiteren Parametern, wie beispielsweise der Feuchte beziehungsweise der Trockenheit des Erntegutes, einstellen. Denkbar ist aber auch, daß die Körbe oder Korbbereiche nur in vorgebbaren Stellungen und insbesondere nur in ihren beiden Endpositionen arretierbar sind.

Die Erfindung läßt eine Vielzahl von Gestaltungsmöglichkeiten zu. Konkrete Ausgestaltungen der erfindungsgemäßen Drescheinrichtungen für einen Mähdrescher ist im folgenden beschrieben und anhand der Figuren erläutert:

Es zeigen:
- Figur 1:: ein Viertrommeldreschwerk, bei dem sich die Korbbereiche im Wirkbereich der Wende- und Abscheidetrommel befindet,
- Figur 2:: ein Viertrommeldreschwerk, bei dem die Korbbereiche aus dem Wirkbereich der Wende- und Abscheidetrommel herausbewegt sind,
- Figur 3:: ein Dreitrommeldreschwerk, bei dem die Körbe in Wirkstellung angeordnet sind und
- Figur 4:: ein Dreitrommeldreschwerk nach Figur 3, bei dem der Wendekorb und ein Teil des Abscheidekorbes weggeschwenkt sind.

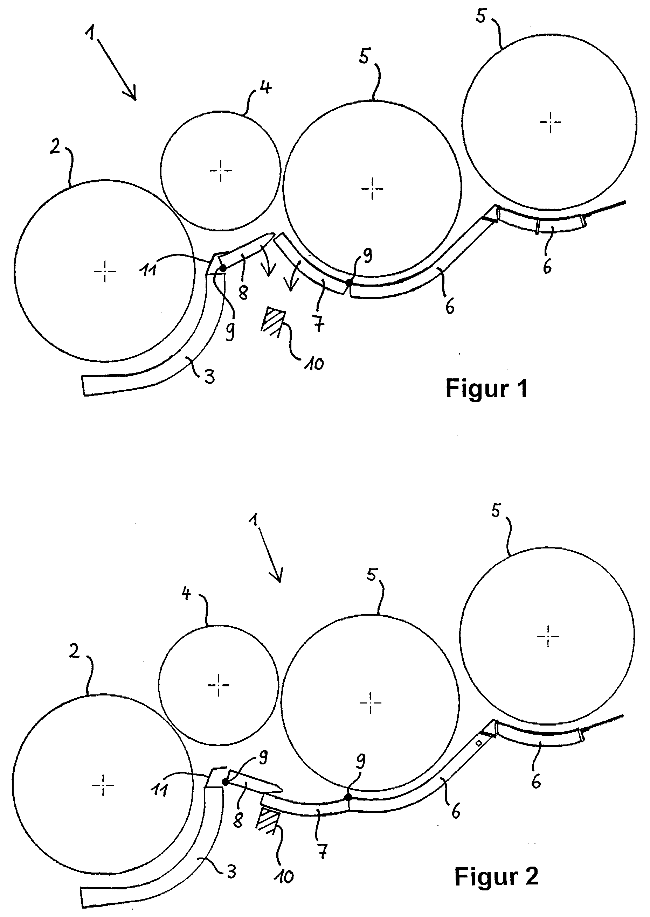

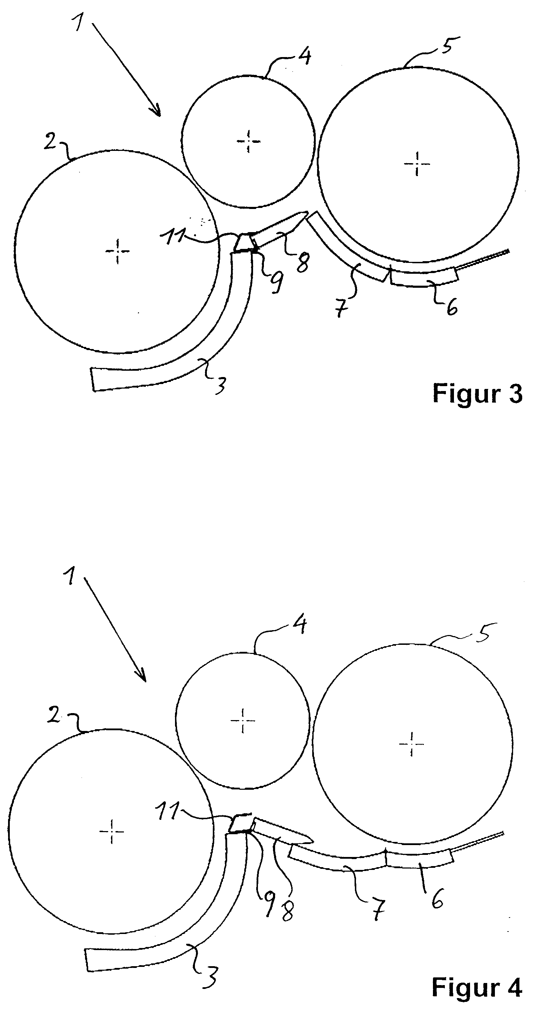

Figur 1 bis 4 zeigen eine erfindungsgemäße Drescheinrichtung 1, die in einem an sich bekannten Mähdrescher beliebiger Bauart einsetzbar ist. Einer Dreschtrommel 2 ist in einem gewissen Abstand zum Umfang ein Dreschkorb 3 zugeordnet, wobei in an sich bekannter Weise im Spalt zwischen der Dreschtrommel 2 und dem Dreschkorb 3 das Erntegut ausgedroschen wird. Der Dreschtrommel 2 nachgeordnet ist eine Wendetrommel 4 mit einem Wendekorb 8. Die Wendetrommel 4 ist beispielsweise eine geschlossene, mit Leisten versehene Stahltrommel, die das von der Dreschtrommel 2 kommende Gut abbremst und es einer Abscheidetrommel 5 mit einem zugeordneten Abscheidekorb 6 zuleitet. Dabei beschränkt sich die Erfindung nicht auf eine einzige Abscheidetrommel 5 (Dreitrommeldreschwerk nach Figur 3 und 4), sondern es können (wie in den Figuren 1 und 2 gezeigt) auch mehrere Abscheidetrommeln 5 gleicher oder unterschiedlicher Bauart hintereinander angeordnet sein, bei denen es sich dann um ein Viertrommel- oder auch Mähtrommeldreschwerk handelt.

Wie in den Figuren 1 bis 4 gezeigt, ist der Wendekorb 8 und ein Teil 7 des Abscheidekorbes 6 aus dem Wirkbereich der jeweiligen Trommeln heraus bewegbar. Der bewegliche Teil 7 des Abscheidekorbes 6 und der Wendekorb 8 sind um Drehachsen 9 am Ende des Dreschkorbes 3 beziehungsweise an dem feststehenden Teil des Abscheidekorbes 6 angeordnet. An einem festen Teil des Mähdreschers (nicht gezeigt) ist ein Anschlag 10 vorgesehen. Weiterhin ist noch in dem Übergangsbereich vom Dreschkorb 3 zu dem Wendekorb 8 eine Abdeckung 11 gezeigt, die die Drehachse 9 abdeckt und sich insbesondere über die gesamte Breite des Dreschkorbes 3, beziehungsweise des Wendekorbes 8 erstreckt, um den Spalt zwischen diesen beiden zu verdecken und somit Verstopfungen oder Blockierungen des Erntegutflusses zu vermeiden.

Figur 2 und 4 zeigen erfindungsgemäße Drescheinrichtungen 1, bei denen nach Verschwenkung des beweglichen Teiles 7 des Abscheidekorbes 6 in Richtung des Anschlages 10 und Verschwenkung des Wendekorbes 8 entlang des Pfeiles in Richtung des Anschlages 10 um die Drehachsen 9 herum der Erntegutstrom direkt von der Dreschtrommel 2 in Richtung des Spaltes zwischen der Abscheidetrommel 5 und dem Abscheidekorb 6 geleitet wird. Zur Vermeidung von Verstopfungen und um eine Abdichtung zu erreichen, überlappen sich der bewegliche Teil 7 des Abscheidekorbes 6 und der Wendekorb 8 nach dem Verschwenken. Es sei ausdrücklich darauf hingewiesen, daß die Drehachse 9 nicht unbedingt am Übergang zwischen Dreschkorb 3 und Wendekorb 8 liegen muß. Sie kann auch in den Dreschkorbbereich verschoben sein, so daß beim Verschwenken ein Teil des Dreschkorbes 3 und der Wendekorb 8 aus dem Wirkbereich bewegt werden. Dies kann auch durch ein Doppelschwenken um die abgebildete Drehachse 9 und eine nicht dargestellte Drehachse im Dreschkorbbereich erfolgen, die dann auch gegensinnig verschwenkt werden können. Es ist auch denkbar, den beweglichen Teil 7 des Abscheidekorbes 6 und den Wendekorb 8 und/oder einen Teil des Dreschkorbes 3 zu einer Baueinheit zusammenzufassen oder einstückig auszubilden und dann beispielsweise mittels einer Linearbewegung (bei Betrachtung der Figuren 1 und 3 beziehungsweise Figuren 2 und 4 eine Bewegung nach oben oder unten) oder der Drehbewegung aus dem Wirkbereich der Wendetrommel 4 heraus zu bewegen oder umgekehrt.

Zur Vermeidung von Verstopfungen oder Behinderungen im Falle einer linearen Verstellung ist es vorgesehen, daß zwischen dem Dreschkorb 3 und/oder dem Abscheidekorb 6 und dem Wendekorb 8 in Abhängigkeit der Einstellung des Spaltes eine abstandsausgleichende Einrichtung vorgesehen ist. Diese kann in einfacher Weise, zum Beispiel derart vorgesehen sein, daß sich die Abdeckung 11 soweit in den der Wendetrommel 4 zugeordneten Endbereich des Dreschkorbes 3 erstreckt, daß für jede Einstellung der Abstand zwischen dem Endbereich des Dreschkorbes 3 und dem Anfangsbereich des Abscheidekorbes 6 abgedeckt ist.

## Patentansprüche

1. Drescheinrichtung (1) für einen Mähdrescher, wobei die Drescheinrichtung (1) als Mehrtrommeldreschwerk ausgebildet ist, das vorzugsweise zumindest eine Dreschtrommel (2) mit einem zugeordneten Dreschkorb (3), eine der Dreschtrommel (2) nachgeordnete Wendetrommel (4) mit Wendekorb (8) und zumindest eine der Wendetrommel (4) nachgeschaltete Abscheidetrommel (5) mit zugeordnetem Abscheidekorb (6) aufweist,
**dadurch gekennzeichnet,** daß der Wendekorb (8) oder ein Teilbereich (8a) des Wendekorbes (8) zumindest aus dem Wirkbereich der Wendetrommel (4) heraus bewegbar ist.

2. Drescheinrichtung (1) nach Anspruch 1,
**dadurch gekennzeichnet,** daß der Abscheidekorb (6) oder ein beweglicher Teil (7) des Abscheidekorbes (6) bei einem Dreitrommeldreschwerk oder die Abscheidekörbe (6) oder Teile (7) der Abscheidekörbe (6) bei Vier- oder Mehrtrommeldreschwerken aus dem Wirkbereich der jeweiligen Trommel oder Trommeln bewegbar sind.

3. Drescheinrichtung (1) nach Anspruch 1 oder 2,
**dadurch gekennzeichnet,** daß der Wendekorb (8) oder zumindest der Abscheidekorb (6) und/oder deren bewegliche Teile (7, 8a) um Drehachsen (9) herum aus dem Wirkbereich herausschwenkbar sind.

4. Drescheinrichtung (1) nach einem der vorhergehenden Ansprüche,
**dadurch gekennzeichnet,** daß sich der Abscheidekorb (6) oder der bewegliche Teil (7) des Abscheidekorbes (6) und der Wendekorb (8) oder der bewegliche Teil (8a) des Wendekorbes (8) nach der Herausbewegung aus dem Wirkbereich überlappen.

5. Drescheinrichtung (1) nach einem der vorhergehenden Ansprüche,
**dadurch gekennzeichnet,** daß zumindest der bewegliche Teil (7) des Abscheidekorbes (6) gegen einen Anschlag (10) bewegbar ist.

6. Drescheinrichtung (1) nach einem der vorhergehenden Ansprüche,
**dadurch gekennzeichnet,** daß zumindest im Bereich der Drehachse (9) des Wendekorbes (8) eine Abdeckung (10) vorgesehen ist.

7. Drescheinrichtung (1) nach einem der vorhergehenden Ansprüche,
**dadurch gekennzeichnet,** daß die Körbe (6 und 8) oder deren bewegliche Teile (7 und 8a) in einer beliebigen Stellung zwischen Wirkbereich und unwirksamen Bereich arretierbar sind.

8. Drescheinrichtung (1) nach einem der vorhergehenden Ansprüche,
**dadurch gekennzeichnet,** daß zwischen dem Dreschkorb (3) und/oder dem Abscheidekorb (6) und/oder dem Wendekorb (8) oder den beweglichen Teilen derselben in Abhängigkeit der Einstellung abstandsausgleichende Einrichtungen vorgesehen ist.
